# EUROPEAN PATENT APPLICATION

(11) **EP 1 632 851 A2**
(43) Date of publication of application: **08.03.2006**
(21) Application number: 05254798.1
(22) Date of filing: 30.07.2005
(51) Int. Cl.: G06F 9/44

(54) **Method and apparatus for changing background screen in an operating system**

(30) Priority: 14.08.2004 KR 2004064126
(71) Applicant: SAMSUNG ELECTRONICS CO., LTD., Suwon-si, Gyeonggi-do (KR)
(72) Inventor: Kim, Su-hyun, Seoul (KR)
(74) Representative: Brandon, Paul Laurence

(57) **Abstract**

An apparatus for changing a background screen with a thumb icon, in an operating system (240, 440, 640) having a graphic user interface environment, includes: a background screen information database (230, 430, 630) for storing, searching, and editing background screen information (232, 432, 632) containing information on a kind of a thumb icon included in the background screen; and a background screen changing unit (220, 420, 620) for extracting the background screen information (232, 432, 632) from the background screen database (230, 430, 630), and based on the extracted background screen information (232, 432, 632), generating a thumb icon creating command to instruct the operating system (240, 440, 640) to create the thumb icon included in the background screen information (232, 432, 632) on a present background screen. A user can select a background screen suitable for a present task from a variety of background screens, thereby increasing task efficiency.

## Description

Apparatuses and methods consistent with the present invention relate to changing a background screen, and more particularly but not exclusively, to changing a background screen by allowing a user to select a background screen suitable for the user's present task from among a plurality of background screens.

Owing to the development of personal computers (PCs) and application programs thereof, a user has the possibility to simultaneously use a variety of application programs. Many users, for example, create thumb icons, and position them on a background screen in order to more easily load desired programs.

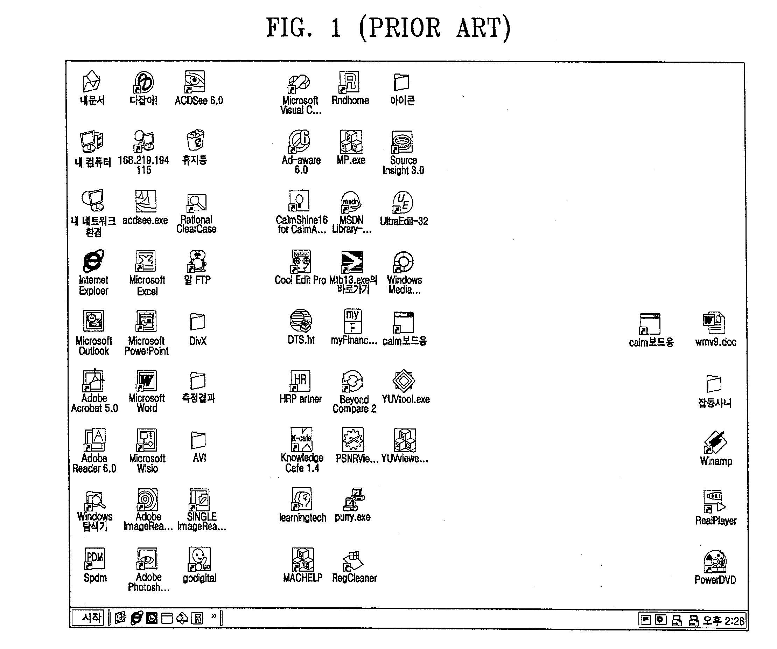

FIG. 1 illustrates icons positioned on a background screen of a conventional Windows (as used herein, Windows is a registered trademark of Microsoft Corporation) operating system. A user classifies and assigns thumb icons to applications that are frequently used at desired positions on the background screen. However, the background screen may contain so many thumb icons that it may not be easy for the user to locate a desired thumb icon.

As shown in FIG. 1, the user creates thumb icons of application programs frequently used in order to easily and quickly execute the application programs. However, due to the large number of thumb icons, it is no longer easy for the user to locate a specific thumb icon of an application program to be executed.

Furthermore, since all thumb icons are positioned only on a single background screen of the conventional Windows operating system, the user cannot enjoy the benefit of additional thumb icons once the entire background screen is covered.

According to a first aspect of the present invention, there is provided an apparatus for changing a background screen in an operating system providing the background screen and a thumb icon in the background screen, the apparatus comprising: a background screen information database for storing, searching, and editing background screen information containing information on a kind of a thumb icon included in the background screen; and a background screen changing unit for extracting the background screen information from the background screen database, and based on the extracted background screen information, generating a thumb icon creating command to instruct the operating system to create the thumb icon included in the background screen information on a present background screen.

The background screen information may contain information on a position of the thumb icon included in the background screen. The background screen changing unit may further generate a thumb icon positioning command to instruct the operating system to position the thumb icon, which is included in the background screen information, on a background screen corresponding to the information on the position of the thumb icon based on the extracted background screen information.

The background screen information may contain information that specifies a program to be executed when the background screen is first selected; and the background screen changing unit may further generate a program executing command to instruct the operating system to execute the specified program.

In response to the thumb icon creating command, the operating system may update a background screen setting file including a kind of a thumb icon included in the background screen.

If the operating system is a Windows operating system, the background screen setting file may correspond to a folder "C:\Documents and Settings\User Name\background screen", and a file "C:\Documents and Settings\User Name\ntuser.dat.LOG".

If the operating system is a Windows operating system, the program executing command may be generated using a method called "_spawnl ()".

According to a second aspect of the present invention, there is provided a method of changing a background screen in an operating system providing the background screen and a thumb icon in the background screen, the method comprising: extracting background screen information from a background screen information database which stores, searches, and edits the background screen information containing information on a kind of a thumb icon included in the background screen; and based on the extracted background screen information, generating a thumb icon creating command to instruct the operating system to create the thumb icon included in the background screen information on a present background screen.

In this way the present invention may provide a method and an apparatus for changing a background screen by providing more than one background screen to allow a thumb icon to be positioned on a different background screen in order to improve a user's task efficiency.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 illustrates icons on a background screen of a conventional Windows operating system;
FIG. 2 illustrates an apparatus for changing a background screen according to a first exemplary embodiment of the present invention;
FIG. 3 illustrates an internal configuration of background screen database stored in the apparatus of FIG. 2;
FIG. 4 illustrates an apparatus for changing a background screen according to a second exemplary embodiment of the present invention;
FIG. 5 illustrates an internal configuration of background screen database stored in the apparatus of FIG. 4;
FIG. 6 illustrates an apparatus for changing a background screen according to a third exemplary embodiment of the present invention;
FIG. 7 illustrates an example of a program executing a command;
FIG. 8 illustrates an internal configuration of background screen database stored in the apparatus of FIG. 6;
FIG. 9 is a flow chart describing a method of changing a background screen according to an exemplary embodiment of the present invention; and
FIGS. 10A to 10E illustrate examples of various background screens according to a method of changing a background screen according to an exemplary embodiment of the present invention.

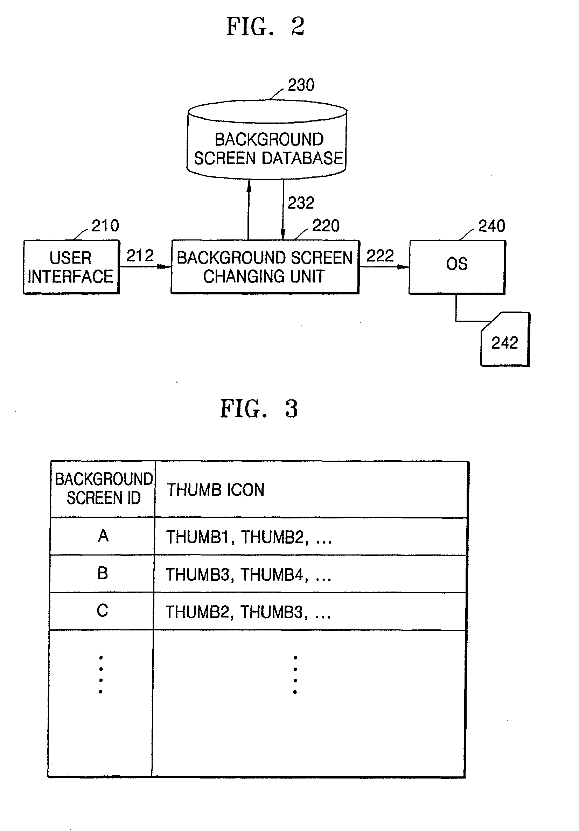

FIG. 2 illustrates an apparatus for changing a background screen according to a first exemplary embodiment of the present invention. Referring to FIG. 2, the apparatus for changing a background screen comprises a user interface 210, a background screen changing unit 220, and a background screen database 230.

The user interface 210 transfers a background screen identifier 212 selected by a user input 200 to the background screen changing unit 220. The user interface 210 displays every background screen identifier capable of being selected by a user, and a background screen identifier and a background screen name presently selected on a computer monitor screen for the user.

The background screen database 230 stores, searches, and edits background screen information on characteristics of each background screen, and contains information on kinds of thumb icons.

The background screen changing unit 220 extracts the background screen information 232 corresponding to the background screen identifier 212 from the background screen database 230, generates a thumb icon creating command 222 to instruct an operating system 240 to create thumb icons included in the background screen information 232 on a present background screen, and transfers the thumb icon creating command 222 to the operating system 240.

In response to the thumb icon creating command 222, the operating system 240 updates a background screen setting file 242 to allow a thumb icon instructed by the thumb icon creating command 222 to be included in a setting value of the present background screen in order to change the present background screen. The background screen setting file 242 is a configuration file having a setting value regarding the kinds of thumb icons included in a present background screen. For example, in the Windows operating system, a thumb icon file included in a present background screen is stored in "C:\Documents and Settings\User Name\background screen". Therefore, the background screen setting file 242 corresponds to a folder "C:\Documents and Settings\User Name\background screen" (i.e., the Windows operating system recognizes a folder as a file). Every operating system supporting a graphic user interface (GUI) such as a Windows operating system, a Macintosh (as used herein, Macintosh is a registered trademark of Apple Computer, Inc.) operating system, a Unix (as used herein, Unix is a registered trademark of The Open Group) operating system, etc., has a background screen with thumb icons included in the background screen, and a background screen setting file including various setting values (e.g., kinds of thumb icons included in the background screen) regarding a present background screen. Therefore, the first exemplary embodiment of the present invention can be applied to every operating system mentioned above.

FIG. 3 illustrates an internal configuration of the background screen database 230. Referring to FIG. 3, the background screen database 230 contains information on a background screen identifier and kinds of thumb icons included in each background screen. Thumb icons positioned on background screen A are THUMB1, THUMB2, etc.; thumb icons positioned on background screen B are THUMB3, THUMB4, etc.; and thumb icons positioned on background screen C are THUMB2, THUMB3, etc.

A user can edit the background screen database 230 in three ways as shown below.

First, a user can copy, paste, or delete a thumb icon of a present background screen at any time. Such operation results in an update of the background screen database 230.

Second, a user can copy, paste, or delete a thumb icon of a present background screen at any time in order to update the background screen database 230. However, the background screen database 230 is not updated to the present background screen when such operation occurs, but is instead updated when the user wants to store the present background screen.

Third, a new user input allows the background screen database 230 to be updated to the present background screen. That is, the background screen database 230 is updated to the present background screen before a background screen is changed by the new user input. For example, after a user adds a new icon "a" to background screen A, the background screen database 230 is updated to include the new icon "a" when a new user input is processed.

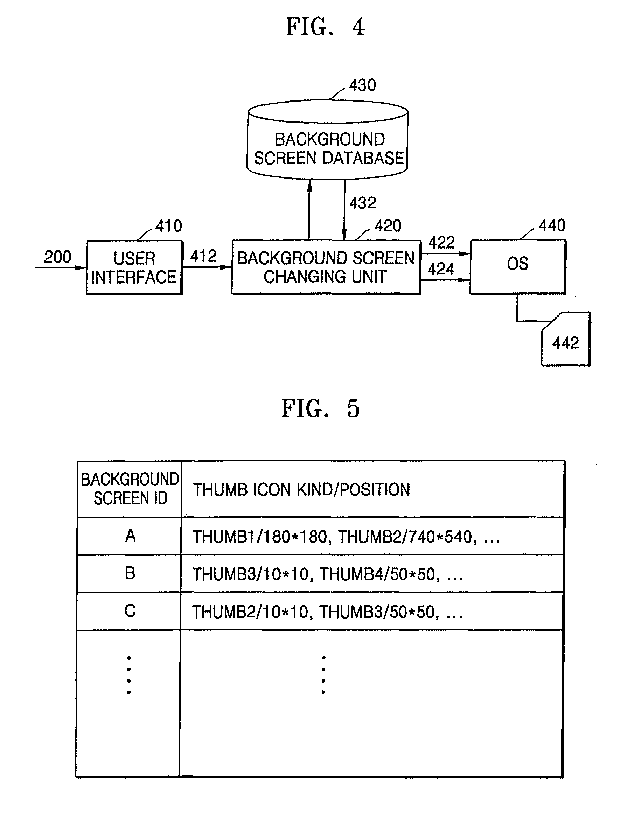

FIG. 4 illustrates an apparatus for changing a background screen according to a second exemplary embodiment of the present invention. Referring to FIG. 4, the apparatus for changing a background screen comprises a user interface 410, a background screen changing unit 420, and a background screen database 430.

The user interface 410 transfers a background screen identifier 412 selected by a user input 200 to the background screen changing unit 420. The user interface 410 displays every background screen identifier capable of being selected by a user, and a background screen identifier and a background screen name presently selected on a computer monitor screen for the user.

The background screen database 430 stores, searches, and edits background screen information on characteristics of each background screen. In the exemplary embodiment illustrated in FIG. 4, background screen information 432 contains information on kinds and positions of thumb icons.

The background screen changing unit 420 extracts the background screen information 432 corresponding to the background screen identifier 412 from the background screen database 430, generates a thumb icon creating command 422 to instruct an operating system 440 to create a thumb icon included in the background screen information 432 on a present background screen, generates a thumb icon positioning command 424 to instruct the operating system 440 to position a thumb icon included in the background screen information 432 on the present background screen, and transfers the thumb icon creating command 422 and the thumb icon positioning command 424 to the operating system 440. Both the thumb icon creating command 422 and the thumb icon positioning command 424 are generated for each thumb icon.

In response to the thumb icon creating command 422 and the thumb icon positioning command 424, the operating system 440 updates a background screen setting file 442 to include the kind and position of a thumb icon instructed by the thumb icon creating command 422 and the thumb icon positioning command 424 in a setting value of a present background screen, in order to change the present background screen. The background screen setting file 442 includes every configuration file having a setting value regarding the kinds and positions of thumb icons included in the present background screen.

In the same manner as for the exemplary embodiment illustrated in FIG. 2, the Windows operating system stores, for example, a thumb icon file included in the present background screen in a folder "C:\Documents and Settings\User Name\background screen". The Windows operating system also stores, for example, information on positions of thumb icons positioned on a background screen in a file "C:\Documents and Settings\User Name\ntuser.dat.LOG". Therefore, the background screen setting file 442 includes a file corresponding to the folder "C:\Documents and Settings\User Name\background screen", and the file "C:\Documents and Settings\User Name\ntuser.dat.LOG". That is, the Windows operating system updates a file corresponding to the folder "C:\Documents and Settings\User Name\background screen" in response to the thumb icon creating command 422, and the file "C:\Documents and Settings\User Name\ntuser.dat.LOG" in response to the thumb icon positioning command 424.

Every operating system supporting a graphic user interface (GUI) such as a Windows operating system, a Macintosh operating system, a Unix operating system, etc., has a background screen with thumb icons included in the background screen, and a background screen setting file including various setting values (e.g., kinds and positions of thumb icons included in the background screen) regarding the present background screen.

Therefore, the second embodiment of the present invention can be applied to every operating system mentioned above.

FIG. 5 illustrates an internal configuration of the background screen database 430. Referring to FIG. 5, the background screen database 430 contains information on a background screen identifier and kinds and positions of thumb icons included in each background screen. For example, thumb icons positioned on background screen A are THUMB1, THUMB2, etc. A thumb icon THUMB1 is positioned, for example, at a pixel location of 180*180.

A user can edit the background screen database 430 in three ways as described above for the exemplary embodiment illustrated in FIG. 3.

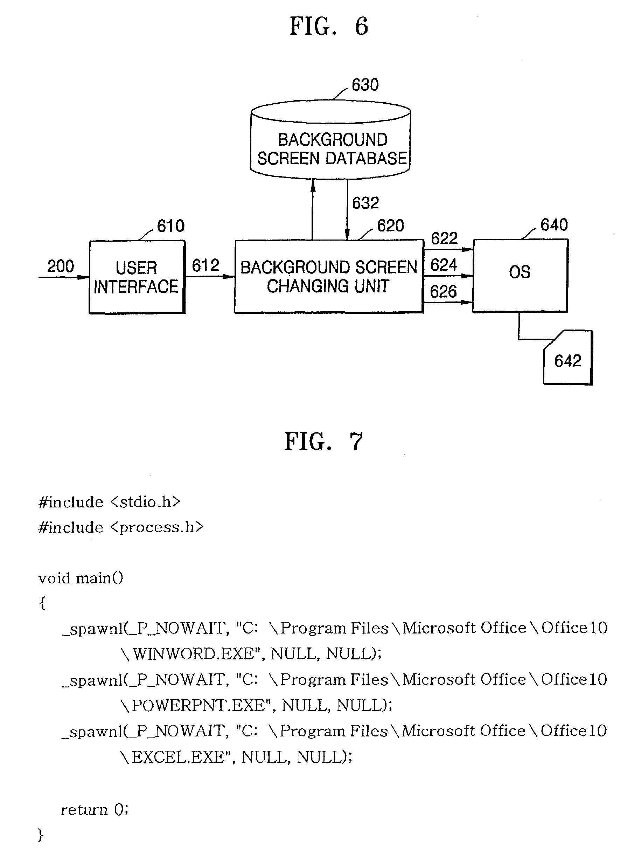

FIG. 6 illustrates an apparatus for changing a background screen according to a third exemplary embodiment of the present invention. Referring to FIG. 6, the apparatus for changing a background screen comprises a user interface 610, a background screen changing unit 620, and a background screen database 630.

The user interface 610 transfers a background screen identifier 612 selected by a user input 200 to the background screen changing unit 620. The user interface 610 displays every background screen identifier capable of being selected by a user, and a background screen identifier and a background screen name presently selected on a computer monitor screen for the user.

The background screen database 630 stores, searches, and edits background screen information on characteristics of each background screen. In an embodiment illustrated in FIG. 6, background screen information 632 contains information on kinds and positions of thumb icons, and information on an application program to be executed.

The background screen changing unit 620 extracts the background screen information 632 corresponding to the background screen identifier 612 from the background screen database 630, generates a thumb icon creating command 622 to instruct an operating system 640 to create a thumb icon included in the background screen information 632 on a present background screen, generates a thumb icon positioning command 624 to instruct the operating system 640 to position a thumb icon instructed by the background screen information 632 on the present background screen, generates a program executing command 626 to instruct the operating system 640 to execute an application program instructed by the background screen information 632, and transfers the thumb icon creating command 622, the thumb icon positioning command 624, and the program executing command 626 to the operating system 640. Both the thumb icon creating command 622 and the thumb icon positioning command 624 are generated for each thumb icon, and the program executing command 626 is generated for each program to be executed.

In the same manner as for the second exemplary embodiment illustrated in FIG. 4, in response to the thumb icon creating command 622 and the thumb icon positioning command 624, the operating system 640 updates a background screen setting file 642 to allow kinds and positions of thumb icons instructed by the thumb icon creating command 622 and the thumb icon positioning command 624 to be included in a setting value of the present background screen in order to change the present background screen. The background screen setting file 642 is a configuration file having a setting value regarding the kinds and positions of thumb icons included in the present background screen. As described in the embodiments illustrated in FIGS. 2 and 4, the Windows operating system updates a file corresponding to a folder "C:\Documents and Settings\User Name\background screen" in response to the thumb icon creating command 622, a file "C:\Documents and Settings\User Name\ntuser.dat.LOG" in response to the thumb icon positioning command 624, and additionally executes a program instructed by the program executing command 626 in response to the program executing command 626.

FIG. 7 illustrates an example of a program executing command. Referring to FIG. 7, when the operating system is the Windows operating system, the program executing command 626 transferred from the background screen changing unit 620 to the operating system 640 may be a program code using a method called "_spawnl ()" that includes an execution file of a program to be executed as an internal parameter. Referring to FIG. 7, the program executing command 626 commands the Windows operating system to execute programs in the order of "winword.exe" - > "powerpnt.exe" -> "excel.exe". In order to use an automatic execution as shown in FIG. 7, it is checked if a background screen including an automatic execution program is first selected. After selecting background screen A including an automatic execution program, a user selects background screen B and then selects background screen A again. Likewise, whenever the user selects background screen A, the program executing command 626 should not be transferred to the operating system 640. Therefore, when the background screen changing unit 620 counts the number of the user inputs 612, and a background screen instructed by the user input 612 has a list of automatic execution programs, the program executing command 626 is transferred to the operating system 640 only when the user input 612 is first input in the background screen, and the program executing command 626 is not transferred to the operating system 640 only when the user input 612 is not first input in the background screen.

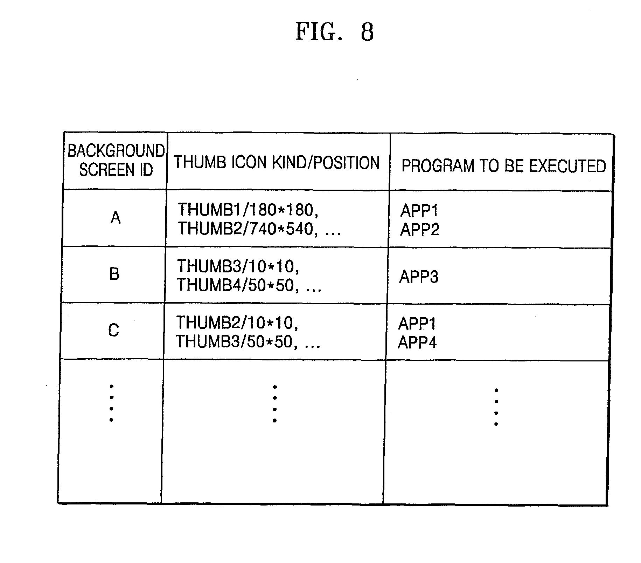

FIG. 8 illustrates an internal configuration of the background screen database 630. Referring to FIG. 8, the background screen database 630 contains information on a program to be executed when a background screen is first selected after booting an operating system in addition to information on a background screen identifier and kinds and positions of thumb icons included in each background screen. For example, thumb icons positioned on background screen A are THUMB1, THUMB2, etc. A thumb icon THUMB1 is positioned, for example, at pixel location 180*180. In addition, APP1 and APP2 are specified applications to be executed upon the selection of background screen A.

A user can edit the background screen database 630 in three ways as described above for the exemplary embodiment illustrated in FIG. 3. Preferably, only a user should personally edit an execution program.

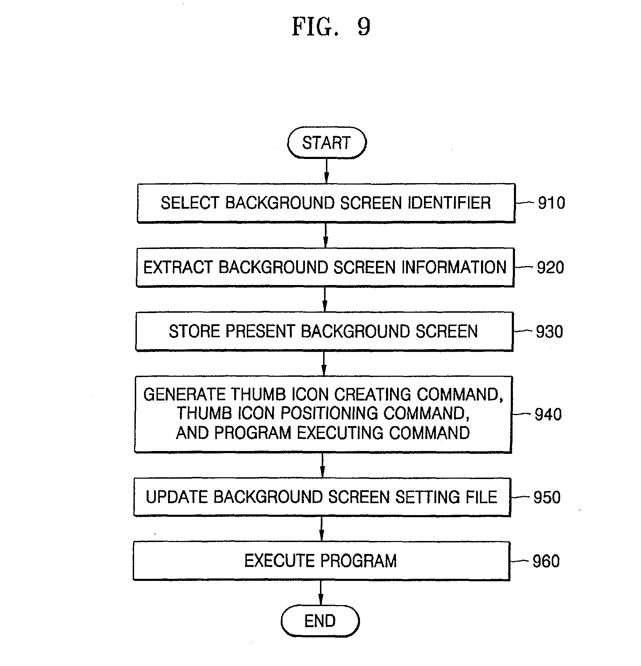

FIG. 9 is a flow chart describing a method of changing a background screen according to an exemplary embodiment of the present invention.

In Operation 910, a user selects a background screen identifier.

In Operation 920, the background screen changing unit 620 extracts the background screen information 632 corresponding to the background screen identifier selected in Operation 910. The background screen information 632 contains information on kinds and positions of thumb icons, and information on an application program to be executed.

In Operation 930, the background screen database 630 stores a present background screen. When a user adds or deletes a thumb icon, changes a position of a thumb icon, or adds or deletes an execution program, these changes are stored in the background screen database 630.

In Operation 940, the background screen changing unit 620 generates a thumb icon creating command 622 to instruct the operating system 640 to create a thumb icon included in the background screen information 632 on a present background screen, a thumb icon positioning command 624 to instruct the operating system 640 to position a thumb icon instructed by the background screen information 632 on the present background screen, and a program executing command 626 to instruct the operating system 640 to execute an application program instructed by the background screen information 632, and transfers the thumb icon creating command 622, the thumb icon positioning command 624, and the program executing command 626 to the operating system 640.

In Operation 950, the operating system 640 updates the background screen setting file 642 to allow kinds and positions of thumb icons instructed by the thumb icon creating command 622 and the thumb icon positioning command 624 to be included in a setting value of the present background screen in order to change the present background screen. Each operating system has a different background screen setting file, and may have many background screen setting files. As described above, the Windows operating system stores, for example, kinds of thumb icons in a file corresponding to a folder "C:\Documents and Settings\User Name\background screen", and positions of thumb icons in a file "C:\Documents and Settings\User Name\ntuser.dat.LOG".

In Operation 960, the operating system 640 executes a program instructed by the program executing command 626 in response to the program executing command 626.

In another embodiment of the present invention, the thumb icon positioning command 624 and the program executing command 626 are omitted. In another exemplary embodiment of the present invention, Operation 940 is omitted.

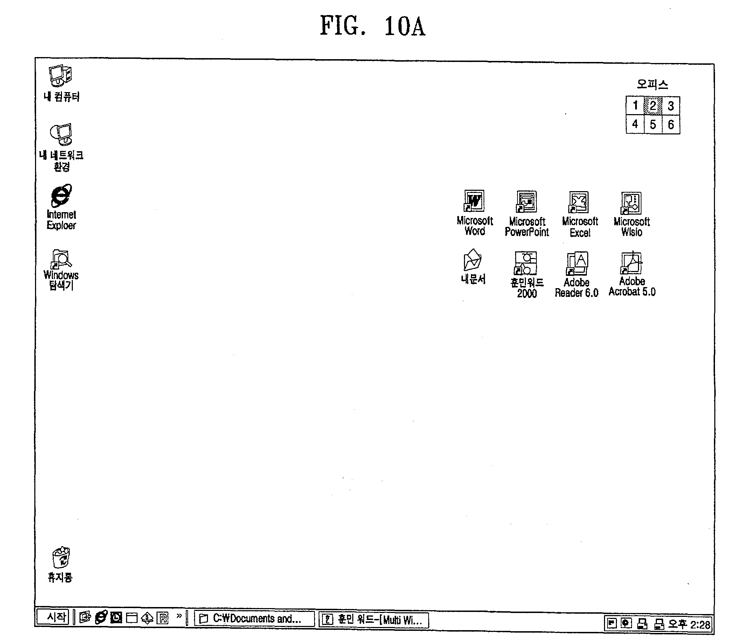

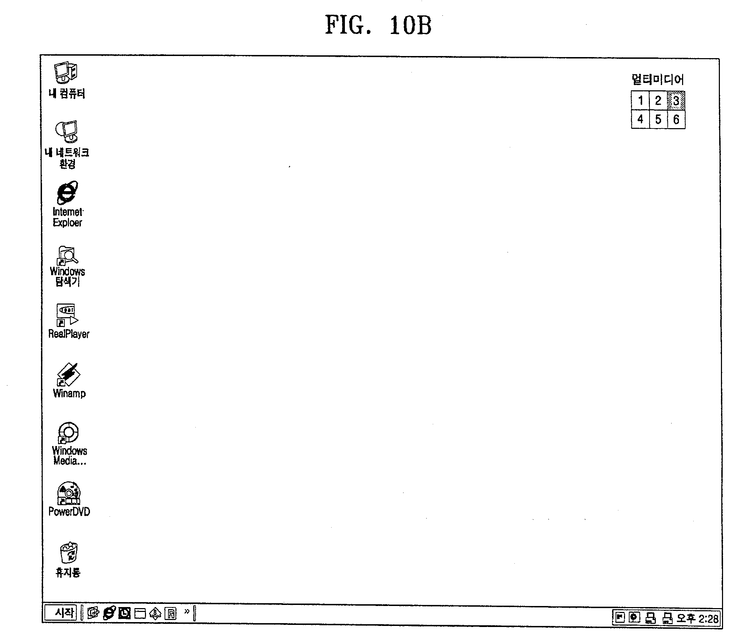

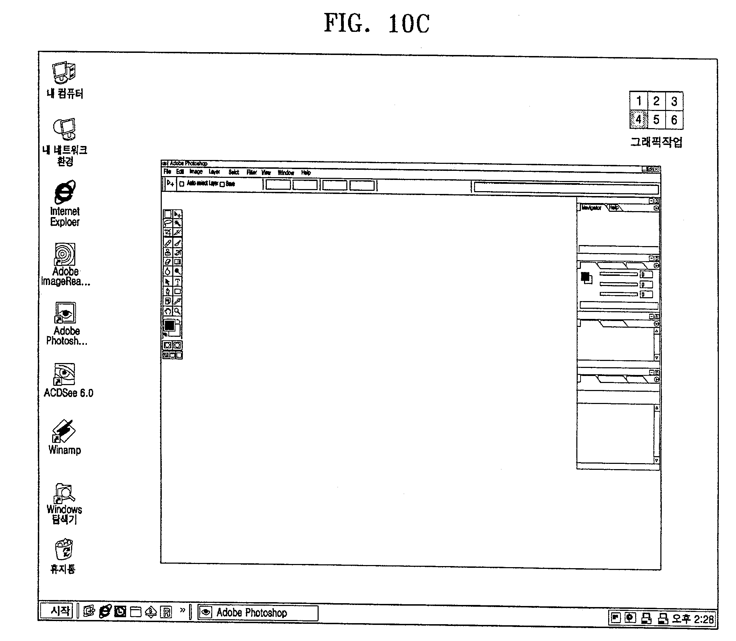

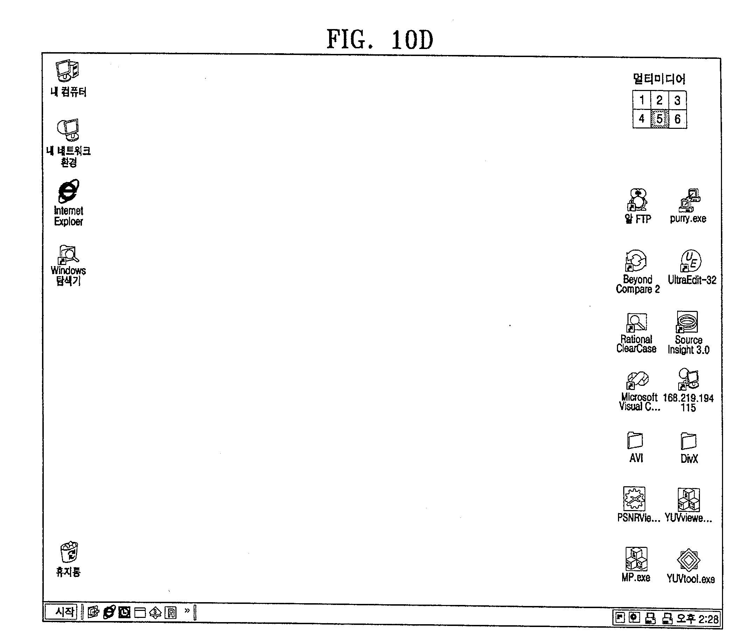

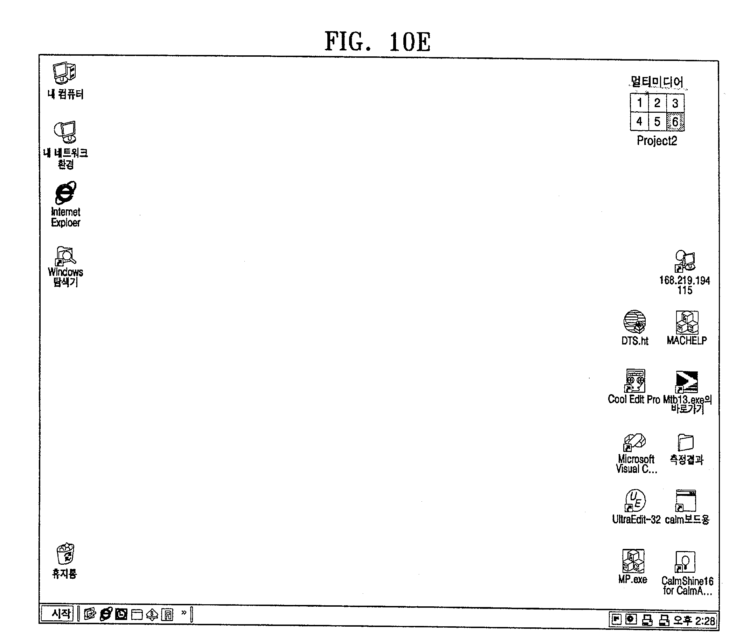

FIGS. 10A to 10E illustrate examples of various background screens according to a method of changing a background screen according to an exemplary embodiment of the present invention. At the top right of FIGS. 10A to 10E, user interfaces (e.g., 210, 410, and 610) including a background screen identifier and a present background screen name are positioned.

Referring to FIGS. 10A to 10E, each background screen has different thumb icons at different positions, and different programs are executed. This makes it possible for a user to easily locate a desired thumb icon, which is different, for example, from the cluttered arrangement illustrated in FIG. 1.

It is possible for the present invention to be realized on a computer-readable recording medium as a computer-readable code. Computer-readable recording mediums include every kind of recording device that stores computer system-readable data, for example, ROMs, RAMs, CD-ROMs, magnetic tapes, floppy discs, optical data storage, etc. Computer-readable recording mediums can also be realized in the form of a carrier wave (e.g., transmissions through the Internet).

According to exemplary embodiments of the present invention, a user displays only the thumb icon necessary for a present task on a background screen, thereby more easily locating a desired thumb icon.

Also, according to exemplary embodiments of the present invention, a user can selects a background screen suitable for a present task from a variety of background screens, thereby increasing task efficiency.

While the present invention has been particularly shown and described with reference to exemplary embodiments thereof, it will be understood by those skilled in the art that various changes in form and details may be made therein without departing from the scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for changing a background screen in an operating system (240, 440, 640) displaying the background screen and a thumb icon in the background screen, the apparatus comprising:
a background screen information database (230, 430, 630) which stores, searches, and edits background screen information (232, 432, 623) which includes information on a kind of the thumb icon included in the background screen; and
a background screen changing unit (220, 420, 620) which extracts the background screen information (232, 432, 632) from the background screen database (230, 430, 630), and based on the extracted background screen information (232, 432, 632), generates a thumb icon creating command (222, 422, 622) to instruct the operating system (240, 440, 640) to create the thumb icon included in the background screen information (232, 432, 632) on the background screen.

2. The apparatus according to claim 1, wherein the background screen information (232, 432, 632) further includes information on a position of the thumb icon included in the background screen; and
the background screen changing unit (220, 420, 620) further generates a thumb icon positioning command (424, 624) to instruct the operating system (240, 440, 640) to display the thumb icon at a position on the background screen corresponding to the information on the position of the thumb icon included in the background screen information (232, 432, 632).

3. The apparatus according to claim 1 or 2, wherein the background screen information (232, 432, 632) further includes information on a program to be executed when the background screen is first selected; and
the background screen changing unit further generates a program executing command (626) to instruct the operating system (240, 440, 640) to execute the program.

4. The apparatus according to any preceding claim, wherein in response to the thumb icon creating command (222, 422, 622), the operating system (240, 440, 640) updates a background screen setting file which includes the kind of the thumb icon included in the background screen.

5. The apparatus according to claim 4, wherein the operating system is a Windows operating system, and the background screen setting file (242, 442, 642) corresponds to a folder "C:\Documents and Settings\User Name\background screen".

6. The apparatus according to claim 2, or according to any one of claims 3-5 as dependent on claim 2, wherein the in response to the thumb icon positioning command (424, 624), the operating system (240, 440, 640) updates a background screen setting file (442, 642) which contains the position of the thumb icon included in the background screen.

7. The apparatus according to claim 6, wherein the operating system is a Windows operating system, and the background screen setting file is a file "C:\Documents and Settings\User Name\ntuser.dat.LOG".

8. The apparatus according to claim 3, or on any one of claims 4-7 as dependent on claim 3, wherein the operating system is a Windows operating system, and the program executing command is generated using a method "_spawnl ()".

9. The apparatus according to any preceding claim, further comprising a user interface (210, 410, 610) which displays a background screen identifier (212, 412, 612) for each of a plurality of background screens capable of being selected by a user on a monitor screen, and transfers the background screen identifier (212, 412, 612) selected by the user to the background screen changing unit (220, 420, 620).

10. A method of changing a background screen in an operating system (240, 440, 640) displaying the background screen and a thumb icon in the background screen, the method comprising:
extracting background screen information (232, 432, 632) from a background screen information database (230, 430, 630) which stores, searches, and edits the background screen information (232, 432, 632) which includes information on a kind of the thumb icon included in the background screen; and
based on the extracted background screen information (232, 432, 632), generating a thumb icon creating command (222, 422, 622) to instruct the operating system (240, 440, 640) to create the thumb icon included in the background screen information (232, 432, 632) on the background screen.

11. The method according to claim 10, wherein the background screen information (232, 432, 632) further includes information on a position of the thumb icon included in the background screen, the method further comprising generating a thumb icon positioning command (424, 624) to instruct the operating system (240, 440, 640) to display the thumb icon at a position on the background screen corresponding to the information on the position of the thumb icon included in the background screen information (232, 432, 632).

12. The method according to claim 10 or 11, wherein the background screen information (232, 432, 632) contains information on a program to be executed when the background screen is first selected, the method further comprising generating a program executing command (626) to instruct the operating system (240, 440, 640) to execute the program.

13. The method according to any one of claims 10-12, wherein in response to the thumb icon creating command (222, 422, 622), the operating system (240, 440, 640) updates a background screen setting file (242, 442, 642) which contains the kind of the thumb icon included in the background screen.

14. The method according to claim 13, wherein the operating system (240, 440, 640) is a Windows operating system, and the background screen setting file (242, 442, 642) corresponds to a folder "C:\Documents and Settings\User Name\background screen".

15. The method according to claim 11, or on any one of claims 12-14 as dependent on claim 11, wherein the in response to the thumb icon positioning command (424, 624), the operating system (240, 440, 640) updates a background screen setting file (442, 642) which includes the position of the thumb icon included in the background screen.

16. The method according to claim 15, wherein the operating system is a Windows operating system, and the background screen setting file (442, 642) is a file "C:\Documents and Settings\User Name\ntuser.dat.LOG".

17. The method according to claim 12 or any one of claims 13 - 16 as dependent on claim 12, wherein the operating system is a Windows operating system, and the program executing command is generated using a method "_spawnl ( )".

18. The method according to any one of claims 10-17, further comprising:
displaying a background screen identifier for each of a plurality of background screens capable of being selected by a user; and
displaying at least one of a current background screen identifier and a background screen name which identifies a present background screen.

19. A computer readable medium having embodied thereon a computer program for executing a method of changing a background screen in an operating system displaying the background screen and a thumb icon in the background screen, the method comprising:
extracting background screen information (232, 432, 632) from a background screen information database (230, 430, 630) which stores, searches, and edits the background screen information (232, 432, 632) which includes information on a kind of the thumb icon included in the background screen; and
based on the extracted background screen information (232, 432, 632), generating a thumb icon creating command to instruct the operating system (240, 440, 640) to create
the thumb icon included in the background screen information (232, 432, 632) on the background screen.
